# EUROPEAN PATENT SPECIFICATION

(11) **EP 2 435 494 B1**
(45) Date of publication and mention of the grant of the patent: **23.04.2014**
(21) Application number: 10722239.0
(22) Date of filing: 19.05.2010
(51) Int. Cl.: C08G 59/20, C08L 63/00

(54) **POLYMERIC GLYCIDYL ETHERS REACTIVE DILUENTS**
POLYMERE GLYCIDYLETHER ALS REAKTIVE VERDÜNNUNGSMITTEL
DILUANTS RÉACTIFS ÉTHERS GLYCIDYLIQUES POLYMÈRES

(30) Priority: 27.05.2009 US 181311 P
(43) Date of publication of application: 04.04.2012
(73) Proprietor: Dow Global Technologies LLC, Midland, MI 48674 (US)
(72) Inventor: SCHRÖTZ, Markus, 88416 Ochsenhausen (DE); HUMMEL, Marcus, 88487 Mietingen-baltringen (DE); HUELSKAEMPER, Ludwig, 88448 Attenweiler (DE)
(74) Representative: Beck Greener
(86) International application number: PCT/US2010/035337
(87) International publication number: WO 2010/138346

(56) References cited:
- GB-A- 1 025 733
- GB-A- 2 209 339
- JP-A- 6 172 336

## Description

### BACKGROUND OF THE INVENTION

### Field of the Invention

The present invention relates to a thermosettable resin composition including at least one polymeric glycidyl reactive diluent; and a cured product made from the cured thermosettable composition.

### Description of Background and Related Art

Monofunctional glycidyl ethers (MGEs) of fatty alcohols are well known reactive diluents for epoxy resins. Due to their epoxy functionalities, epoxidized polyalkylene glycols (PAGs) like polyethylene glycol (PEG), polypropylene glycol (PPG) and polybutylene glycol (PBG) are known as special glycidyl ethers for different purposes, e.g. sizing agents for fibres, flexibilizers for epoxy resins, components for electrodepositable paints, and raw materials for the synthesis of polyols. Even the glycidyl ethers (GEs) from monoalkylated polyalkyl glycols (PAGs) are known, for example, as an additive for various compositions. The GEs derived from those PAGs are typical examples of PGEs.

The known PGEs exhibit a good to fair water solubility or at least adequate dispersibility. However, at the same time, the PGEs have only limited cutting power due to many oxygen ether functions in the molecule interacting with the epoxy resin.

Several GEs with monomeric structures are known compounds and are used in various applications for example as disclosed in Lee, H. and Neville, K., Handbook of Epoxy Resins, McGraw-Hill Book Company, New York, 1967. It would be desirable to provide GEs with polymeric structures to use in applications generally reserved for GEs with monomeric structures.

GB 1 025 733 discloses spreadable flooring compositions comprising a well-blended mixture containing 8-20% by wt. based on the composition of a curable glycidyl polyether of a bisphenol, 1-10% by wt. based on the composition of a curing system comprising a polyamide of a polymeric fat acid and a polyamine, the system being present in an amount of 1-50% by wt. based on the polyether, and 60-90% by wt. based on the composition of a graded filler. The curing system may also contain an amine such as an alkylene polyamine or a tertiary amine and the compositions may also contain a pigment and/or a poly(butylglycidyl ether). The filler may be sand or SiO2, and may contain an abrasive such as 30-grit aluminium oxide. The compositions may be used for surfacing floors, roadways, stair treads and vehicle beds.

There is only a limited number of known polymer monofunctional GEs, for example, WO 2005058971 discloses radicals derived from C6-C12 0-7 EO-MGE. The C6-C12 0-7 EO-MGE is used as a modifier for starch. EP 1191039 discloses, for example, C12-3EO-MGE for the same purpose.

There is still a need in the industry for a polymeric GE that has a cutting power (i.e., the capability of reducing viscosity of a liquid epoxy resin (LER) by blending the GE into the LER; the less amount of GE that is needed for a given end viscosity, the better the cutting power of such GE) better than or comparable to GEs available in the industry such as C12/C14-MGE (Polypox R24) commercially available from e.g. UPPC AG. There is also still a need in the industry for a polymeric GE that has an improved or comparable surface appearance. In addition, there is a need in the industry to provide an improved polymeric GE that does not show a decrease in other of its advantageous properties such as Tg, toughness, wetting properties, chemical resistance, water swelling resistance, and prolonged pot life.

It is therefore desired to provide polymeric GEs as reactive diluents for thermosetting resins, such as epoxy resins, with a cutting power comparable to known standard GEs such as for example C12/C14-MGE, without a dramatic decrease in other properties such as chemical resistance, surface appearance and toughness, and with an improvement in properties like wetting or flexibility.

It would also be desirable to provide a process for preparing polymeric glycidyl ethers in good yield wherein such polymeric glycidyl ethers may be used as reactive diluents for thermosetting resins such as epoxy resins.

### SUMMARY OF THE INVENTION

The present invention utilizes polymeric MGEs, for example C12/C14 fatty alcohol, ethoxilated-MGE, of fatty alcohols similar to classical reactive diluents for thermosetting resins.

One aspect of the present invention is directed to a thermosettable resin composition including (a) at least one thermosetting resin; (b) at least one polymeric glycidyl reactive diluent which comprises a monoglycidyl ether derived from an at least threefold ethoxylated aliphatic alcohol; and (c) a hardener.

In one embodiment, the thermosettable composition may be at least one epoxy resin.

Another aspect of the present invention is directed to a process for producing the above thermosettable resin composition.

Still another aspect of the present invention is directed to a cured product comprising the cured thermosettable composition described above.

Yet another aspect of the present invention is directed to a process for producing a cured resin thermoset product including the steps of:
(I) admixing (a) at least one thermosetting resin; (b) at least one polymeric glycidyl reactive diluent which comprises a monoglycidyl ether derived from an at least threefold ethoxylated aliphatic alcohol; and (c) a hardener; and
(II) curing the mixture of step (I) at an elevated temperature.

Surprisingly, it has been found that the compounds of the present invention exhibit both a good cutting power with some amount of enhanced water solubility, as shown in water swelling resistance tests of a cured epoxy system, in which the resinous component (component (a)) is diluted with one of the polymeric GE products of the present invention.

### BRIEF DESCRIPTION OF THE DRAWINGS

For the purpose of illustrating the present invention, the following drawings are provided wherein:

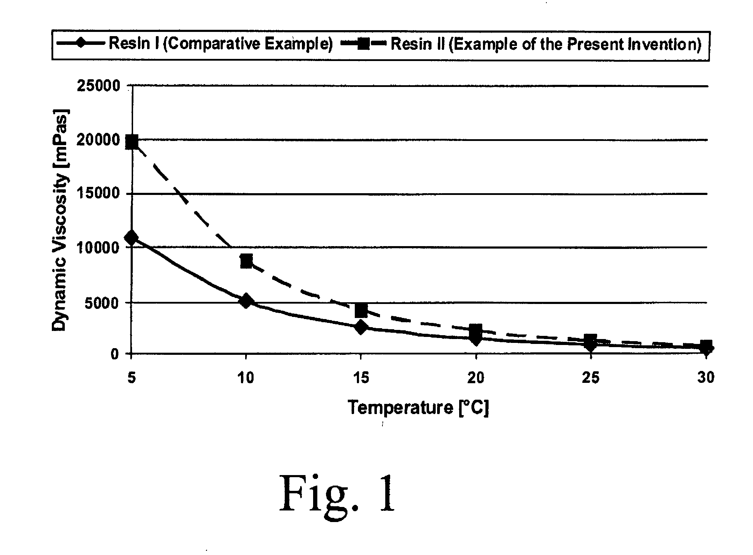

Figure 1 is a graphical illustration showing the results of cutting power at different temperatures of a polymeric GE used in a composition of the present invention (Resin II) compared to a GE of the prior art used in a comparative composition (Resin I).

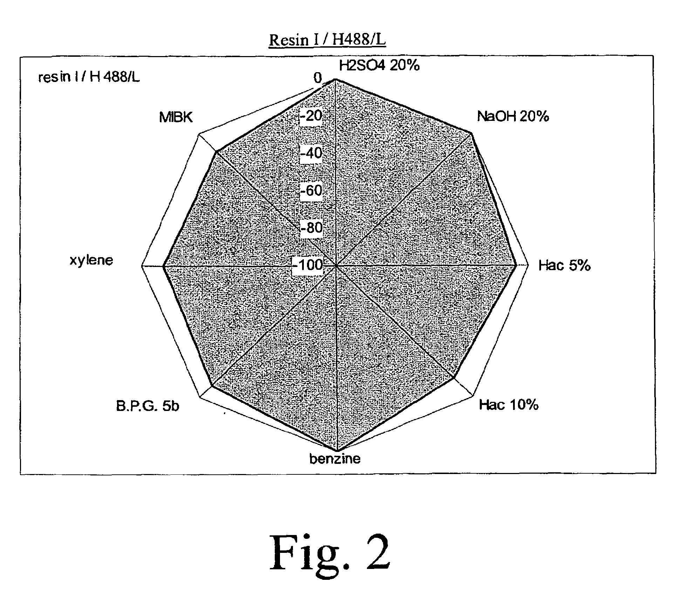

Figure 2 is a graphical illustration in the form of an octagonal spider web graph with eight axis showing the results of chemical resistance testing of a cured resin system of a comparative composition (Resin I).

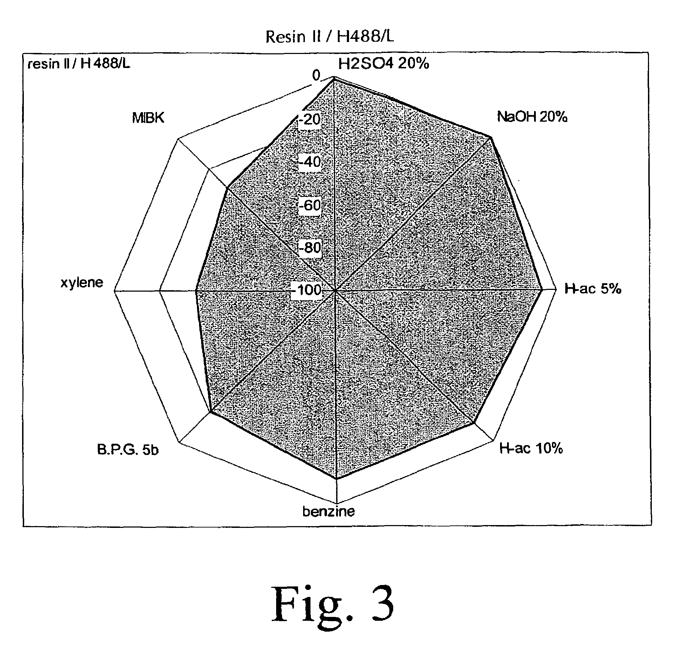

Figure 3 is a graphical illustration in the form of an octagonal spider web graph with eight axis showing the results of chemical resistance testing of a cured resin system of the present invention (Resin II).

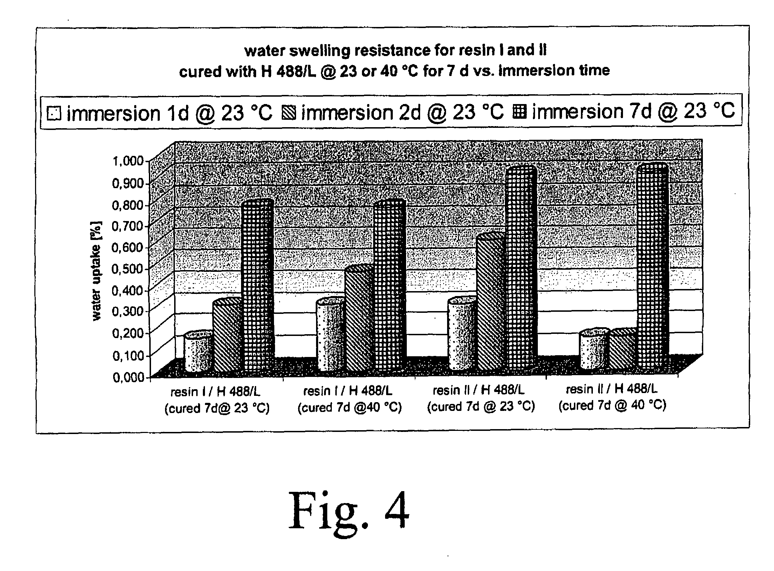

Figure 4 is a graphical illustration in the form of a bar chart showing the water swelling resistance (water uptake) of a cured resin system of the present invention (Resin II) compared to a comparative cured system (Resin I).

### DETAILED DESCRIPTION OF THE INVENTION

In its broadest scope, the present invention is directed to a thermosettable resin composition utilizing polymeric glycidyl ethers as reactive diluents wherein the polymeric glycidyl ether reactive diluent comprises a monoglycidyl ether derived from an at least threefold ethoxylated aliphatic alcohol. Accordingly, the thermosettable resin composition, system or formulation includes a combination of a thermosettable resin composition comprising (a) at least one thermosetting resin such as for example an epoxy resin; (b) at least one polymeric glycidyl reactive diluent which comprises a monoglycidyl ether derived from an at least threefold ethoxylated aliphatic alcohol; and (c) a hardener such as for example an amine harder.

The glycidyl ether polymeric diluent products of the present invention provide a thermosettable resin composition that can be cured; and the resulting cured system exhibits interesting properties such as for example surface appearance enhancement, improved flexibilizing properties, and improved wetting properties.

The cutting power of the polymeric products of the present invention is comparable to known MGEs, and the surface properties (in the cured system) are enhanced. Surprisingly, the use of a standard synthesis, i.e, for example, a BF₃-catalyzed addition of epichlorohydrin (ECH), and subsequent elimination with caustic soda, works well in terms of yield and processability.

In one embodiment of the present invention, polymeric GEs prepared from ethoxylated alcohols such as alkoxylated alcohols -MGEs are used as reactive diluents for thermosetting resins such as epoxy resins.

In general, the process of the present invention utilizes at least threefold alkoxylated medium-chained alcohols, recognized as polymers; and then the alkoxylated medium-chained alcohols are converted to glycidyl ethers via, for example, an ECH and caustic route. More particularly, the process of preparing a glycidyl ether of the present invention comprises the steps of (i) reacting at least one ethoxylated alcohol compound with epihalohydrin in the presence of a catalyst; (ii) adding a solvent; and then (iii) reacting with an aqueous base such as sodium hydroxide (NaOH) to form the corresponding glycidyl ether.

The at least one polymeric glycidyl reactive diluent, component (b) of the present invention includes a monoglycidyl ether of at least a threefold ethoxylated aliphatic alcohol.

In one embodiment, the thermosettable resin composition includes a monoglycidyl ether of at least a threefold ethoxylated aliphatic alcohol which has from C4 to C 40 carbon atoms. This monoglycidyl ether of at least a threefold ethoxylated aliphatic alcohol from C4 to C 40 may be branched or linear. Examples of the monoglycidyl ether of at least a threefold ethoxylated aliphatic alcohol from C4 to C 40 may include mixtures of different chain length or branched/unbranched hydrocarbon backbones.

The at least one polymeric glycidyl ether is present in the thermosettable composition of the present invention in an amount of from 2 weight percent (wt%) to 30 wt%; preferably from 4 wt% to 20 wt%, and more preferably from 6 wt% to 15 wt% based on the weight of the total components in the composition.

The at least one polymeric glycidyl ether, component (b), useful in the present invention to be added to a thermosetting resin, component (a), may be synthesized by any well known means in the art. For example a process for making the polymeric glycidyl ethers comprises the steps of (i) reacting at least one ethoxylated alcohol compound with epichlorohydrin in the presence of a catalyst; (ii) adding a solvent; and (iii) reacting with an aqueous NaOH to form the corresponding glycidyl ether.

In one embodiment of the present invention, the synthesis of the at least one polymeric glycidyl ether may include a process such as described, for example, in F. Lohse in Houben-Weyl, Methoden der organischen Chemie, Vol 20E (1987) p. 1911-1924. In general, the above process includes reacting an ethoxylated alcohol with an epihalohydrin catalyzed with a BF₃ catalyst followed by epoxide formation with the addition of an aqueous caustic soda.

For example, in preparing the at least one polymeric glycidyl ether, component (b), useful in the present invention, the ethoxylated alcohol useful in the process may be selected from commercially available ethoxylated alcohols such as for example Lutensol XP 30 or Lutensol AO 30 (both commercially available from BASF); Genapol LA 030 (commercially available from Clariant); and mixtures thereof. Preferably, Genapol LA 030 may be used in the present invention because this ethoxylated alcohol contains a C12/C14 backbone that can be obtained from natural sources.

The ethoxylated alcohol compound useful in the process for preparing the at least one polymeric glycidyl ether, includes an alcohol+3 EO. These examples of the ethoxylated alcohols are polymers preferably containing a degree of ethoxylation of at least 3 and have a molecular distribution.

In general, greater than 80 percent (%) of the alcohol functionalities in the alcohol compound are converted into glycidyl groups; preferably greater than 90 % of the alcohol functionalities in the alcohol compound are converted into glycidyl groups; and most preferably, 100 % of the alcohol functionalities in the alcohol compound are converted into glycidyl groups. Any unreacted alcohol groups remaining in the final product is generally less than 5 % and does not detrimentally affect the composition, or the application of the composition, of the present invention.

The epihalohydrin useful in preparing the at least one polymeric glycidyl ether, component (b), of the present invention, may be any epihalohydrin known in the art such as for example, epichlorohydrin (ECH), epibromohydrin and mixtures thereof.

The concentration of the epihalohydrin that may be used includes a molar ratio of epihalohydrin:OH of from 1:0.8 to 1:1.8, preferably from 1:0.9 to 1:1.5 and more preferably from 1:1 to 1:1.2.

The catalyst useful in preparing the at least one polymeric glycidyl ether, component (b), of the present invention, may be any catalyst known in the art used for this purpose. For example, the catalyst may be Lewis acids known in the art. Catalysts include for example, BF₃ ethyl etherate, BF₃ hydrate, Mg(ClO₄)₂, SnCl₄ ,and mixtures thereof.

The concentration of the catalyst is between 0.001 wt % to 5 wt %, preferably between 0.01 wt % to 2 wt %, and more preferably between 0.1 wt % to 1 wt %, based on the weight of the total reactants. Below the concentration of 0.001 wt %, there is no significant reaction; and above the concentration of 5 wt %, there is a waste of material, formation of unwanted side products, and discoloration in the final product.

In preparing the at least one polymeric glycidyl ether, component (b), useful in the present invention, a halohydrin intermediate is formed when an ethoxylated alcohol is reacted with an epihalohydrin catalyzed with a BF₃ catalyst. This step is then followed by epoxide formation with the addition of a basic compound addition.

The basic compound useful in preparing the at least one polymeric glycidyl ether, component (b), of the present invention, may be any basic compound known in the art. For example, the basic compound may be an alkali metal hydroxide or alkali metal carbonate. Preferably, the basic compound is used in the aqueous solution. For example, the basic compound may be an aqueous sodium hydroxide (NaOH), calcium hydroxide, potassium hydroxide, and mixtures thereof; or a carbonate of sodium, calcium or potassium and mixture thereof; and any combination of basic compounds.

The concentration of the aqueous basic compound such as aqueous NaOH used in the process may be between 1 wt % to 100 wt %, preferably between 5 wt % to 50 wt %, and more preferably between 10 wt % to 30 wt %.

A solvent may optionally be used in the process for preparing the at least one polymeric glycidyl ether, component (b), of the present invention. For example, one or more solvents selected, for example, from toluene, xylene, butanols, 2-butanone and mixtures thereof may be used. Preferably, the solvent used in the present invention is toluene.

The amount of the solvent used in the process may be between 0 wt % to 200 wt %, preferably between 10 wt % to 150 wt %, and more preferably between 20 wt % to 100 wt %, based on the weight of the final product.

The final reactive diluent product may display properties such as for example epoxy equivalent (g/equiv.); dynamic viscosity @ 25 °C (mPas); a color (Gardener); easily saponifiable chlorine, as referred to as hydrolysable chlorides (%); and a refractive index.

For example, values for the epoxy equivalent (g/equiv.) of the reactive diluent is generally from 50 to 5000; preferably from 100 to 4000; and more preferably from 150 to 2500.

For example, values for dynamic viscosity @ 25 °C (mPas) of the reactive diluent is generally from 5 to 5000; preferably from 4 to 4000; and more preferably from 1 to 500.

For example, values for color (Gardener) of the reactive diluent is generally from 0 to 15; preferably from 0 to 10; and more preferably from 0 to 5.

For example, values for the easily saponifiable chlorine, or hydrolysable chlorides (%) of the reactive diluent is generally from 0 to 2%; preferably from 0.05 to 1 and more preferably from 0.01 to 0.5.

In preparing the at least one polymeric glycidyl ether, component (b), of the present invention, for example from ethoxylated fatty alcohols and ECH, the order of reacting the components is as described above. However, order of reacting the MGE component prepared above with the thermosetting resin to form the thermosettable resin composition is not critical, i.e., the components of the thermosettable composition of the present invention, including any other additives, may be mixed in any order. One or more of the MGEs prepared as described above may be used as a reactive diluent for thermosetting resins such as epoxy resins.

The concentration of the MGE used in the present invention may be between 0.01 wt % to 50 wt %; preferably between 5 wt % to 40 wt %; and more preferably between 10 wt % to 25 wt %, based on the total weight of the ingredients of the resinous composition. When a concentration above 50 wt% is used, may cause a breakdown of the mechanical properties of the resultant cured product. If a concentration below 0.01 wt% is used, an undesirable high viscosity of the resinous composition may insue.

Component (a) useful in the thermosettable composition of the present invention may be selected from known thermosetting resins in the art including at least one resin selected from epoxy resins; isocyanate resins; (meth)acrylic resins; phenolic resins; vinylic resins; styrenic resins; polyester resins; melamine resins; vinylester resins; silicone resins; and mixtures thereof.

In one preferred embodiment, the thermosetting resin useful in the present invention includes at least one epoxy resin, component (a). The term "epoxy resin" herein means a compound which possesses one or more vicinal epoxy groups per molecule, i.e., at least one 1, 2-epoxy group per molecule. In general, the epoxy resin compound may be a saturated or unsaturated aliphatic, cycloaliphatic, aromatic or heterocyclic compound which possesses at least one 1, 2-epoxy group. Such compounds can be substituted, if desired, with one or more non-interfering substituents, such as halogen atoms, hydroxy groups, ether radicals, lower alkyls and the like. The epoxy resin compound may also be monomeric, oligomeric or polymeric, i.e., the epoxy resin may be selected from a monoepoxide, a diepoxide, a multi-functional epoxy resin, a polyepoxide; or mixtures thereof. An extensive enumeration of epoxy resins useful in the present invention is found in Lee, H. and Neville, K., "Handbook of Epoxy Resins," McGraw-Hill Book Company, New York, 1967, Chapter 2, pages 257-307.

The epoxy resins useful in the present invention may vary and include conventional and commercially available epoxy resins, which may be used alone or in combinations of two or more. In choosing epoxy resins for compositions disclosed herein, consideration should not only be given to properties of the final product, but also to viscosity and other properties that may influence the processing of the resin composition.

Particularly suitable epoxy resins known to the skilled worker are based on reaction products of polyfunctional alcohols, phenols, cycloaliphatic carboxylic acids, aromatic amines, or aminophenols with epichlorohydrin. A few non-limiting embodiments include, for example, bisphenol A diglycidyl ether, bisphenol F diglycidyl ether, resorcinol diglycidyl ether, and triglycidyl ethers of para-aminophenols. Other suitable epoxy resins known to the skilled worker include reaction products of epichlorohydrin with o-cresol and, respectively, phenol novolacs. It is also possible to use a mixture of two or more of any of the above epoxy resins.

The epoxy resins, component (a), useful in the present invention for the preparation of the curable compositions, may be selected from commercially available products. For example, D.E.R. 331, D.E.R.332, D.E.R. 334, D.E.R. 580, D.E.N. 431, D.E.N. 438, D.E.R. 736, or D.E.R. 732 available from The Dow Chemical Company may be used. As an illustration of the present invention, the epoxy resin component (a) may be a liquid epoxy resin, D.E.R.® 383 (DGEBPA) having an epoxide equivalent weight of 175-185 g/equiv., a viscosity of 9500 mPa s and a density of 1.16 g/cm³. Other commercial epoxy resins that can be used for the epoxy resin component can be D.E.R. 330, D.E.R. 354, or D.E.R. 332.

Other suitable epoxy resins useful as component (a) are disclosed in, for example, U.S. Patent Nos. 3,018,262;7,163,973; 6,887,574; 6,632,893; 6,242,083; 7,037,958; 6,572,971; 6,153,719; and 5,405,688; PCT Publication WO 2006/052727; U.S. Patent Application Publication Nos. 20060293172 and 20050171237

In general, the EEW of the epoxy compound useful in the present invention is from 100 to 1000, preferably from 120 to 800, and most preferably from 150 to 500.

In general, the viscosity of the epoxy compound used in the present invention is from 0 mPas to 10000 mPas, preferably from 1 mPas to 1000 mPas, and most preferably from 5 mPas to 500 mPas.

The thermosetting resin, component (a), may be present in the thermosetting composition at a concentration ranging generally from 10 wt%- to 95 wt%; preferably from 20 wt% to 90 wt%, and more preferably from 30 wt% to 80 wt%.

The curing agents, (also referred to as a hardener or cross-linking agent) useful in the thermosettable composition, may be selected, for example, from those curing agents well known in the art including, but are not limited to, anhydrides, carboxylic acids, amine compounds, phenolic compounds, polyols, or mixtures thereof.

As an illustration of one embodiment wherein the thermosetting resin comprises an epoxy resin, at least one curing agent may be selected from amines, phenolic resins, carboxylic acids, carboxylic anhydrides, or mixtures thereof.

As an illustration of one embodiment wherein the thermosetting resin comprises an isocyanate, the at least one curing agent may be selected from at least one polyol.

Examples of the curing agent useful in the present invention include any of the curing materials known to be useful for curing epoxy resin based compositions. Such materials include, for example, polyamine, polyamide, polyaminoamide, dicyandiamide, polyphenol, polymeric thiol, polycarboxylic acid and anhydride, polyol, tertiary amine, quaternary ammonium halide, and any combination thereof or the like. Other specific examples of the curing agent include dicyandiamide, phenol novolacs, bisphenol-A novolacs, phenol novolac of dicyclopentadiene, diphenylsulfone, styrene-maleic acid anhydride (SMA) copolymers; and any combination thereof.

Dicyandiamide ("dicy") maybe one preferred embodiment of the curing agent useful in the present invention. Dicy has the advantage of providing delayed curing since dicy requires relatively high temperatures for activating its curing properties; and thus, dicy can be added to an epoxy resin and stored at room temperature (about 25 °C).

Among the conventional epoxy curing agents, amines or amino a/o amido groups containing substances or mixtures of them are preferred.

Generally, the hardener may be present in the composition of the present invention at a concentration ranging generally from 0.01 wt% to 50 wt%, and preferably from 10 wt% to 40 wt%.

One or more other of any of the standard monomeric GEs known in the art may be used in combination with the polymeric GEs of the present invention in the thermosettable composition of the present invention. For example, some standard monomeric GEs (mono- or difunctional, MGE or DGE) useful in the present invention may include C12/C14 MGE (Polypox R 24), o-cresyl-MGE (Polypox R 6), and 1,4-butanediol-DGE (Polypox R 3).

The concentration of optional standard monomeric GEs may be generally between 1 % to 99 %, preferably between 10 % to 90 %, and more preferably between 20 % to 80 %, based on the weight of the polymeric GE.

The thermosettable composition of the present invention may optionally contain one or more other additives which are useful for their intended uses. For example, the optional additives useful in the present invention thermosettable composition may include, but not limited to, defoamers, wetting agents, stabilizers, surfactants, flow modifiers, pigments, dyes, matting agents, degassing agents, flame retardants, toughening agents, polyols and glycols, curing initiators, curing inhibitors, colorants, pigments, thermoplastics, processing aids, UV blocking compounds, fluorescent compounds, UV stabilizers, inert fillers, antioxidants, impact modifiers including thermoplastic particles, and mixtures thereof. The above list is intended to be exemplary and not limiting. The preferred additives for the, formulation of the present invention may be optimized by the skilled artisan.

The concentration of the additional additives is generally between 0 wt% to 50 wt%, preferably between 0.01 wt% to 20 wt%, more preferably between 0.05 wt% to 15 wt%, and most preferably between 0.1 wt% to 10 wt% based on the weight of the total composition. Below 0.01 wt%, the additives generally do not provide any further significant advantage to the resultant curing composition; and above 20 wt%, the properties improvement brought by these additives remains relatively constant.

The components for producing the final thermosettable resin composition, including the at least one thermosetting resin such as an epoxy resin, the at least one polymeric GE reactive diluent, the hardener and any other optional additive, can be mixed together, wherein the admixing may be carried out at a temperature of from 5 °C to 80 °C.

In general, the pot life of the thermosettable composition, e.g., the epoxy resin composition used in the present invention is from 1 minute to 600 minutes; preferably from 5 minutes to 120 minutes; and most preferably from 15 minutes to 75 minutes, depending on the hardener used.

The final thermosettable formulation can be cured under conventional processing conditions to form a thermoset. In general, the curing reaction may be conducted between 0 °C and 180 °C, preferably between 5 °C and 100 °C, more preferably between 10 °C and 50 °C. Preferably the reaction time is more than 10 minutes and less than 48 hours, preferably between 30 minutes and 24 hours, and more preferably between 1 hours and 6 hours.

In general, the Shore D hardness of the cured epoxy resin used in the present invention is from 10 to 95, preferably from 20 to 90, and most preferably from 35 to 85, depending on the hardener used.

In general, the Tg of the cured epoxy resin used in the present invention is from 0 °C to 120°C, preferably from 10°C to 100°C, and most preferably from 40 °C to 90 °C, depending on the hardener used.

In general, the E-modulus of the cured epoxy resin used in the present invention is from 0 N/mm² to 5000 N/mm², preferably from 100 N/mm² to 3500 N/mm², and most preferably from 500 N/mm² to 2000 N/mm², depending on the hardener used.

As an illustration of the present invention, in general, the thermosettable resin formulations of the present invention may be particularly suitable for applications in civil engineering (CEG) such as for example floorings, coatings, pottings, encapsulations, adhesives, molding, tooling, composites, lacquers, and the like. The present invention compositions may be advantageously used in electrical and electronics applications such as composites, laminates or reactive coating applications. Other applications may include, for example, modification of cellulose, starch, as co-"monomer" for example in fine tuning HLB-values in polyalkylenoxide based tensides or defoamers. The compositions of the present may also be used as adhesion promoters for tire rubber.

### EXAMPLES

The following examples and comparative examples further illustrate the present invention in detail but are not to be construed to limit the scope thereof. The following standard analytical equipments, methods and test procedures are used in the Examples:
"EEW" (g/equiv) stands for epoxide equivalent weight. The epoxy equivalent weight (EEW, g/equiv.) of an epoxy compound is measured according to test method DIN 16945.
The dynamic (dyn) viscosity @ 25 °C (mPas) of an epoxy compound is measured at 25 °C according to test method described in DIN 53018.
Color (Gardener number) is measured according to the process described in DIN 4630.
Hydrolyzable chloride or saponifiable chlorine (%) is measured according to DIN ISO 21627/2.

The refractive index of a cured system is measured according to DIN 51423.

The water swelling test of a thermoset resin sample was carried out as follows: First, because a glycidyl ether is not used alone as an A-component, a mixture of 14 wt % of the glycidyl ether with BisA/BisF (70 wt%: 16 wt%) liquid epoxy resin (LER), such as for example D.E.R. 331 or D.E.R. 354, is prepared. This mixture is mixed (1 amine eq. with 1 epoxy eq.) and cured at room temperature (about 23 °C) with an amine adduct hardener (B-component). Cured 2 mm thick films (and films of other compositions, i.e variations of the GE) were immersed in demineralized water and the weight increase is measured against time. The more the weight is increased the worse is the water swelling resistance.

The chemical resistance of thermoset resin test samples are tested for different reactive diluents (14 wt % of the glycidyl ether with BisA/BisF (70 wt%: 16 wt%) liquid epoxy resin (LER), such as for example D.E.R. 331 or D.E.R. 354, cured with a modified amine hardener, Polypox H 488/L) in different media according to the following method:
A 2 mm film is fully cured (7 days (7d) at room temperature (about 23 °C). A cotton pad is soaked with a test liquid such as for example, gasoline (benzene, mixture of aliphatic hydrocarbons), alcohol mixture (B.P.G. 5b consisting of 46 vol% each ethanol and isopropanol with 4 vol% water), acetic acid (Hac of x wt%), methylisobutylketone (MIBK). The cotton pad is placed on the film's surface and covered to prevent evaporation of the test liquid. The decrease in Shore D hardness over a predetermined period of time is a good indication for the resistance against the different test liquids. Normally the 7d value is taken in terms of percentile decrease.

The points of the octagonal spider web graph in each of the figures can be compared to determine the Shore D hardness of the samples. The "length" of the shrinkage from the points of the spider web graph is the Shore D hardness after 7 days divided by the initial value, showing that a diglycidyl ether of bisphenol A/F resin modified with for example C12/C14-3EO -MGE can compete with C12/C14-MGE

The pot life (minutes) of an epoxy resin is measured according to test method Gelnorm Geltimer TC.

The surface quality of an epoxy resin thermoset product is measured at 23 °C/50 % rH (relative humidity), by visual inspection. Generally, the surface of the resin thermoset should be smooth, glossy, and shiny without any blemishes or other defects. The surface properties for the thermoset resin is designated as "good", "bad" or "fair." For example, in the Examples, a "+" is a "good" surface quality which means a smooth, glossy and shiny surface. A "+/-" is a fair surface quality which means that a few bad surface traits are visible on the surface, but mostly good surface traits are visible on the surface. A "-" is a "bad" surface quality which means the surface contains distortions, blemishes, or a carbamate reaction product on the surface (i.e., blushing or whitening); or the surface is tacky.

The Shore D after 7 days curing @ 23 °C/50 % rH of an epoxy resin is measured at 25 °C according to test method DIN 53505.

The glass transition temperature [Tg (2^{nd} run, °C)] of an epoxy resin is measured according to test method DIN 65467 A.

The E-modulus (N/mm²) of an epoxy resin is measured according to test method EN ISO 178.

### Synthesis Example I - Preparation of Polymeric GE

500 grams (g) of Lutensol XP 30 (C10-Guerbet alcohol +3 EO, available from BASF) were reacted with 183 g of epichlorohydrin under BF3 catalysis. After addition of 400 g of toluene, subsequent elimination with 173 g of 30 % and 175 g of 20 % aqueous NaOH lead to the corresponding glycidyl ether. The parameters of the resultant resin are described in Table I.

### Synthesis Example 2 - Preparation of Polymeric GE

450 g ofLutensol AO 3 (C13/C15-Oxo alcohol +3 EO, available from BASF) were reacted with 136 g of epichlorohydrin under BF3 catalysis. After addition of 400 g of toluene, subsequent elimination with 130 g of 30 % and 130 g of 20 % aqueous NaOH lead to the corresponding glycidyl ether. The parameters of the resultant resin are described in Table I.

### Synthesis Example 3 - Preparation of Polymeric GE

652 g of Genapol LA 030 (C12/C14-Oxo alcohol +3 EO, available from Clariant) were reacted with 212 g of epichlorohydrin under BF₃ catalysis. After addition of 450 g of toluene, subsequent elimination with 233g of 30% and 155 g of 20 % aqueous NaOH lead to the corresponding glycidyl ether. The parameters of the resultant resin are described in Table I.

**Table I**

| Parameter | Synthesis Example 1 | Synthesis Example 2 | Synthesis Example 3 |
|---|---|---|---|
| Epoxy Equivalent Weight (EEW) | 541 g/equiv | 524 g/equiv | 539 g/equiv. |
| Dynamic Viscosity @ 25 °C | 25 mPas | 23 mPas | 22 mPas |
| Color (Gardner) [APHA] | <1 [17] | <1 [16] | <1 [104] |
| Easily Saponifiable Chlorine | 0.41 % | 0.70% | 0.97 % |
| Refractive Index | 1.4489 | 1.4532 | 1.4531 |

### Example 1 - Preparation of Thermosettable Resin and Cured Resin

In this Example of the present invention, the components listed in Table II below were mixed together with stirring in the mixing ratios (Ratio of A-Component:B-Component) described in Table II. The Resin I (Comparative Example A) was a mixture of 14 wt% C12/C14 MGE with 70 wt% bisphenol A resin and 16 wt% bisphenol F resin. Resin II (Example 1) was a mixture of 14 wt% C12/C14-3EO -MGE with 70 wt% bisphenol A resin and 16 wt% bisphenol F resin. Before mixing the components together, the bisphenol A resin was preheated to 60 °C and the bisphenol F resin was used at room temperature (about 25 °C).

**Table II**

| Parameter | Units | Comparative Example A (Resin I) | Example 1 (Resin II) |
|---|---|---|---|
| Epoxy Number | mg KOH/g | 279-303 | approx. 280 |
| Dynamic Viscosity @ 25 °C | mPas | 750-1150 | approx. 1340 |
| | | | |
| Pot Life with Polypox H 488 L | minutes | 54 | 61 |
| | | | |
| Mixing Ratio of Epoxy Resin (A-Component) to Polypox H 488 L (B-Component) | | 100:48.4 | 100:46.5 |

The Comparative Example A and Example 1 resins were subjected to several test procedures and the results of the test procedures are described in the following Tables III - X

**Table III. - Hardness**

| Shore-D @ 23 °C/50% relative humidity after: | Comparative Example A (Resin I/H 488 L) | Example 1 (Resin II/H 488 L) |
|---|---|---|
| 16 hours (h) | 45 | 45 |
| 18 h | 52 | 50 |
| 24 h | 61 | 59 |
| 48 h | 70 | 70 |
| 7 days (d) | 79 | 76 |

**Table III. - Hardness (continued)**

| Shore-D @ 13 °C/80% relative humidity after: | | |
|---|---|---|
| 18h | 21 | 21 |
| 24 h | 34 | 31 |
| 48 h | 63 | 63 |
| 7d | 73 | 72 |
| | | |

| pendulum hardness @ 23 °C/50% relative humidity after: | | |
|---|---|---|
| 16 h | 29 | 13 |
| 18 h | 33 | 16 |
| 24 h | 44 | 20 |
| 48 h | 98 | 36 |
| 7d | 150 | 70 |

| pendulum hardness @ 13°C/80% relative humidity after: | | |
|---|---|---|
| 18h | | |
| 24 h | 6 | 8 |
| 48 h | 13 | 13 |
| 7 d | 41 | 40 |

**Table IV. - Surface**

| | Comparative Example A (Resin I/H 488 L) | Example 1 (Resin II/H 488 L) |
|---|---|---|
| 23°C/50% rH | + | +/- |
| 13°C/80% rH | - | - |

| | | |
|---|---|---|
| In Table IV: + = good; +/- = neutral; - = bad | | |

**Table V. - Water Spotting Resistance**

| | Comparative Example A (Resin I/H 488 L) | Example 1 (Resin II/H 488 L) |
|---|---|---|
| 23°C/50% rH | + | +/- |
| 13°C180% rH | - | - |

| | | |
|---|---|---|
| In Table V: + = good; +/-= fair; - = bad | | |

**Table VI. - UV-B-Test (Yellowing)***

| | Comparative Example A (Resin I/H 488 L) | Example 1 (Resin II/H 488 L) |
|---|---|---|
| 6 h UV-B-lamp | 8 | 8 |

| | | |
|---|---|---|
| *Scale of 1-10 wherein a "10" corresponds to very good. | | |

**Table VII. - Glass Transition Temperature**

| System | Comparative Example A (Resin I/H 488 L) | Example 1 (Resin II/H 488 L) |
|---|---|---|
| Tg₂ after 7 days @ 23°C | 44 °C | 51 °C |
| Tg₂ after 16 hours@ 80°C, 2^{nd} run | 61 °C | 64 °C |

**Table VIII. - Mechanical Values: Pulling According to ISO 527-2**

| | Comparative Example A (Resin I/H 488 L) | Example 1 (Resin II/H 488 L) H 488 L |
|---|---|---|
| curing conditions | 14 days @ 23 °C | 14 days @ 23 °C |
| E-modulus [N/mm²] | 2326 | 2372 |
| tensile strength [N/mm²] | 39 | 38 |
| extension [%] | 2.5 | 3.2 |
| elongation @ break [%] | 3.6 | 4.6 |

**Table IX. - Mechanical Values: Bending According to ISO 178 (DIN 53452)**

| | Comparative Example A (Resin I/H 488 L) | Example 1 (Resin II/H 488 L) |
|---|---|---|
| curing conditions | 8 days @ 23 °C + 3 hours @ 80 °C | 8 days @ 23 °C + 3 hours @ 80 °C |
| E-modulus [N/mm²] | 2278 | 2182 |
| flexural strength [N/mm²] | 73 | 66 |

**Table X. - Mechanical Values: Compressing According to ISO 604/B/5**

| | Comparative Example A (Resin I/H 488 L) | Example 1 (Resin II/H 488 L) |
|---|---|---|
| curing conditions | 14 days @ 23 °C | 14 days @ 23 °C |
| compressive strength [N/mm²] | 75 | 67 |

## Claims

1. A thermosettable resin composition comprising (a) at least one thermosetting resin; (b) at least one polymeric glycidyl reactive diluent which comprises a monoglycidyl ether derived from an at least threefold ethoxylated aliphatic alcohol; and (c) a hardener.

2. The composition of claim 1, wherein the at least one thermosetting resin comprises an epoxy resin.

3. The composition of claim 2, wherein the at least one epoxy resin comprises a diglycidyl ether of bisphenol A.

4. The composition of claim 2, wherein at least one epoxy resin is present in an amount of from 10 weight percent to 80 weight percent, based on the weight of the total components in the composition.

5. The composition of claim 4, wherein the monoglycidyl ether of at least a threefold ethoxylated aliphatic alcohol comprises from C4 to C 40 carbon atoms.

6. The composition of claim 5, wherein the monoglycidyl ether is branched, unbranched, or a mixture of homologs.

7. The composition of claim 6, wherein the homologs include C12/C14; C13/C15; or C13 fatty alcohol mixtures.

8. The composition of claim 1, wherein the at least one polymeric glycidyl ether is present in an amount of from 10 weight percent to 40 weight percent, based on the weight of the total components in the composition.

9. The composition of claim 1, wherein the hardener is a polyamine or polyaminoamide type hardener.

10. The composition of claim 1, wherein the hardener is present in an amount of from 10 weight percent to 60 weight percent, based on the weight of the total components in the composition.

11. A process for producing a thermosettable resin composition comprising admixing (a) at least one thermosetting resin; (b) at least one polymeric glycidyl reactive diluent which comprises a monoglycidyl ether derived from an at least threefold ethoxylated aliphatic alcohol; and (c) a hardener.

12. A process for producing a cured resin thermoset product comprising the steps of:
(I) admixing (a) at least one thermosetting resin; (b) at least one polymeric glycidyl reactive diluent which comprises a monoglycidyl ether derived from an at least threefold ethoxylated aliphatic alcohol; and (c) a hardener; and
(II) curing the mixture of step (I) at a temperature of from 5 °C to 120 °C.

13. A cured product comprising the cured composition of claim 1.

## Patentansprüche

1. Eine wärmehärtbare Harzzusammensetzung, beinhaltend (a) mindestens ein wärmehärtendes Harz; (b) mindestens ein reaktives Verdünnungsmittel von polymerem Glycidyl, das einen Monoglycidylether beinhaltet, der von einem mindestens dreifach ethoxylierten aliphatischen Alkohol abgeleitet ist; und (c) einen Härter.

2. Zusammensetzung gemäß Anspruch 1, wobei das mindestens eine wärmehärtende Harz ein Epoxidharz beinhaltet.

3. Zusammensetzung gemäß Anspruch 2, wobei das mindestens eine Epoxidharz einen Diglycidylether von Bisphenol A beinhaltet.

4. Zusammensetzung gemäß Anspruch 2, wobei mindestens ein Epoxidharz in einer Menge von 10 Gewichtsprozent bis 80 Gewichtsprozent, bezogen auf das Gewicht aller Komponenten in der Zusammensetzung, vorliegt.

5. Zusammensetzung gemäß Anspruch 4, wobei der Monoglycidylether von mindestens einem dreifach ethoxylierten aliphatischen Alkohol C4- bis C40-Kohlenstoffatome beinhaltet.

6. Zusammensetzung gemäß Anspruch 5, wobei der Monoglycidylether verzweigt, unverzweigt oder eine Mischung von Homologen ist.

7. Zusammensetzung gemäß Anspruch 6, wobei die Homologe C12/C14-; C13/C15-; oder C13-Fettalkoholmischungen einschließen.

8. Zusammensetzung gemäß Anspruch 1, wobei der mindestens eine polymere Glycidylether in einer Menge von 10 Gewichtsprozent bis 40 Gewichtsprozent, bezogen auf das Gewicht aller Komponenten in der Zusammensetzung, vorliegt.

9. Zusammensetzung gemäß Anspruch 1, wobei der Härter ein Härter des Typs Polyamin oder Polyaminamid ist.

10. Zusammensetzung gemäß Anspruch 1, wobei der Härter in einer Menge von 10 Gewichtsprozent bis 60 Gewichtsprozent, bezogen auf das Gewicht aller Komponenten in der Zusammensetzung, vorliegt.

11. Ein Verfahren zum Erzeugen einer wärmehärtbaren Harzzusammensetzung, beinhaltend das Vermischen von (a) mindestens einem wärmehärtenden Harz; (b) mindestens einem reaktiven Verdünnungsmittel von polymerem Glycidyl, das einen Monoglycidylether beinhaltet, der von einem mindestens dreifach ethoxylierten aliphatischen Alkohol abgeleitet ist; und (c) einem Härter.

12. Ein Verfahren zum Erzeugen eines duroplastischen Harzformstoffproduktes, das die folgenden Schritte beinhaltet:
(I) Vermischen (a) mindestens eines wärmehärtenden Harzes; (b) mindestens eines reaktiven Verdünnungsmittels von polymerem Glycidyl, das einen Monoglycidylether beinhaltet, der von einem mindestens dreifach ethoxylierten aliphatischen Alkohol abgeleitet ist; und (c) eines Härters; und
(II) Aushärten der Mischung von Schritt (I) bei einer Temperatur von 5 °C bis 120 °C.

13. Ein ausgehärtetes Produkt, beinhaltend die ausgehärtete Zusammensetzung gemäß Anspruch 1.

## Revendications

1. Une composition de résine pouvant être thermodurcie comprenant (a) au moins une résine thermodurcissable ; (b) au moins un diluant réactif glycidylique polymérique qui comprend un éther monoglycidylique dérivé d'un alcool aliphatique éthoxylé au moins triple ; et (c) un durcisseur.

2. La composition de la revendication 1, dans laquelle l'au moins une résine thermodurcissable comprend une résine époxy.

3. La composition de la revendication 2, dans laquelle l'au moins une résine époxy comprend un éther diglycidylique de bisphénol A.

4. La composition de la revendication 2, dans laquelle au moins une résine époxy est présente dans une quantité allant de 10 pour cent en poids à 80 pour cent en poids, rapportée au poids des composants totaux dans la composition.

5. La composition de la revendication 4, dans laquelle l'éther monoglycidylique d'au moins un alcool aliphatique éthoxylé triple comprend de C4 à C40 atomes de carbone.

6. La composition de la revendication 5, dans laquelle l'éther monoglycidylique est ramifié, non ramifié, ou un mélange d'homologues.

7. La composition de la revendication 6, dans laquelle les homologues incluent des mélanges d'alcools gras C12/C14 ; C13/C15 ; ou C13.

8. La composition de la revendication 1, dans laquelle l'au moins un éther glycidylique polymérique est présent dans une quantité allant de 10 pour cent en poids à 40 pour cent en poids, rapportée au poids des composants totaux dans la composition.

9. La composition de la revendication 1, dans laquelle le durcisseur est un durcisseur de type polyamine ou polyaminoamide.

10. La composition de la revendication 1, dans laquelle le durcisseur est présent dans une quantité allant de 10 pour cent en poids à 60 pour cent en poids, rapportée au poids des composants totaux dans la composition.

11. Un procédé pour produire une composition de résine pouvant être thermodurcie comprenant mélanger additionnellement
(a) au moins une résine thermodurcissable ;
(b) au moins un diluant réactif glycidylique polymérique qui comprend un éther monoglycidylique dérivé d'un alcool aliphatique éthoxylé au moins triple ; et (c) un durcisseur.

12. Un procédé pour produire un produit thermodurci en résine traitée comprenant les étapes consistant à :
(I) mélanger additionnellement (a) au moins une résine thermodurcissable ; (b) au moins un diluant réactif glycidylique polymérique qui comprend un éther monoglycidylique dérivé d'un alcool aliphatique éthoxylé au moins triple ; et (c) un durcisseur ; et
(II) traiter le mélange de l'étape (I) à une température allant de 5 °C à 120 °C.

13. Un produit traité comprenant la composition traitée de la revendication 1.
